# EUROPÄISCHE PATENTSCHRIFT

(11) **EP 1 323 600 B1**
(45) Veröffentlichungstag und Bekanntmachung des Hinweises auf die Patenterteilung: **11.10.2006**
(21) Anmeldenummer: 02027218.3
(22) Anmeldetag: 06.12.2002
(51) Int. Cl.: B60R 25/02

(54) **Lenksäulenmodul mit Lenkschlosssicherung**
Steering column module witha secure mounting of the lock
Boîtier antivol de direction avec fixation sécurisée de la serrure

(30) Priorität: 12.12.2001 DE 10160945
(43) Veröffentlichungstag der Anmeldung: 02.07.2003
(73) Patentinhaber: ADAM OPEL AG, 65423 Rüsselsheim (DE)
(72) Erfinder: Milke, Burkhard Dr.-Ing., 65817 Eppstein (DE); Markard, Wolfgang, Dipl.-Ing., 65439 Flörsheim (DE); Boldt, Martin, Dr.-Ing., 65468 Trebur (DE)

(56) Entgegenhaltungen:
- EP-A- 0 620 339
- DE-A- 3 725 446
- DE-A- 19 923 797
- DE-C- 19 815 311

## Beschreibung

Die Erfindung betrifft ein Lenksäulenmodul, mit einem Trägergehäuse aus Kunststoff für die Lenksäule und einem in das Trägergehäuse eingesetzten Lenkschlossgehäuse aus Metall, das einen Schließbolzen zum Arretieren der Lenksäule aufnimmt, sowie mit einem metallischen Mittel zum Verbinden von Lenkschlossgehäuse und Trägergehäuse.

Um den Diebstahl von Fahrzeugen zu erschweren, werden Lenksäulenmodule so ausgebildet, dass das Trägergehäuse für die Lenksäule und das in das Trägergehäuse eingesetzte Lenkschlossgehäuse miteinander verbunden sind. Nur dann, wenn diese Verbindung bei einem Diebstahl unter Einleitung einer Zugkraft auf das Lenkschlossgehäuse beibehalten wird, ist sichergestellt, dass der in eine Aussparung der Lenksäule eingreifende Schließbolzen nicht aus dieser herausgezogen wird und das Lenkrad zum Drehen freigibt.

Bei einem aus der Praxis bekannten Lenksäulenmodul der eingangs genannten Art wird das metallische Lenkschlossgehäuse und das aus Kunststoff bestehende Trägergehäuse unmittelbar verstiftet. Eine solche Verbindung ist unter dem Aspekt des Diebstahlschutzes nicht zufriedenstellend, weil beim Einleiten der vorgenannten erhöhten Kräfte in das Lenkschlossgehäuse der Stift im Bereich der Verbindung zum Kunststoff-Trägergehäuse ausbricht. Abgesehen davon, dass durch das Lösen dieser Verbindung der Schließbolzen aus seiner Arretierstellung gezogen werden kann, ist es möglich, das Lenkschlossgehäuse, ohne Beschädigung, aus dem Trägergehäuse herauszubrechen.

Aus der Praxis sind ferner aufwendig geschweißte Stahlblechkonstruktionen als Lösungen für die Sicherung des Lenkschlosses bekannt.

Aus der DE 198 15 311 C1 ist eine Sicherungsvorrichtung für ein an einem Mantelrohr einer Lenkung eines Kraftfahrzeuges festgelegtes Lenkradschloss mit einer mantelrohrfesten Aufnahme bekannt. An dieser ist ein Schlossgehäuse festgelegt, wobei die Aufnahme und das Schlossgehäuse fluchtende Bohrungen aufweisen, die von einem Sicherungsbolzen durchsetzt sind. Der Sicherungsbolzen ist von der Aufnahme oder dem Schlossgehäuse zumindest nahezu vollständig umgeben. Konkret weist der Sicherungsbolzen einen ersten unrunden Abschnitt auf, an dem ein zwischen einer Sperrposition und einer Freigabeposition bewegbarer Schlossriegel außerhalb seiner Freigabeposition formschlüssig angreift und den Sicherungsbolzen blockiert. Der Sicherungsbolzen ist zwischen einer Verschiebestellung, in der er aus dem Schlossgehäuse entnehmbar ist, und einer Raststellung, in der er an einem gehäusefesten Anschlag blockiert ist, verdrehbar angeordnet. - Die Sicherungsvorrichtung dient insbesondere dem Zweck, eine zuverlässige befugte Entnahmemöglichkeit des Lenkradschlosses einerseits und einen sicheren Ausbauschutz gegen einen gewaltsamen Eingriff zu gewährleisten. Allerdings ist sie baulich sehr kompliziert gestaltet und bedingt einen hohen Montageaufwand.

In der DE 199 23 797 A1 ist ein Fahrzeugschloss mit Diebstahlsicherung beschrieben. Dort ist der Schließbolzen zum Arretieren der Lenksäule zusätzlich mittels eines Sicherungsbolzens gesichert. Nur dann, wenn dieser nicht in seiner Blockierstellung ist, kann der Schließbolzen zurückgezogen und somit aus der Lenksäule bewegt werden.

In der EP 0 620 339 B1 ist eine Einrichtung zur Befestigung eines Lenkschlosses in seinem Gehäuse beschrieben. Der Schlosskörper des Lenkschlosses wird vor dem Einfügen in das Gehäuse mit einem Betätigungsnocken versehen. Die Befestigung des Lenkschlosses erfolgt mittels einer U-förmigen Metallleiste. Bei einer Winkelposition des Nockens, die sich von der Verriegelungsposition des Lenkschlosses unterscheidet, wirken parallele Schenkel der Metallleiste nacheinander mit radialen Schlitzen des Gehäuses, radialen Durchgängen des Schlosskörpers und mit einer Ausklinkung des Nockens zusammen. Nur eine Person, die über einen auf die Position der Teile abgestimmten Schlüssel verfügt, kann das Schloss betätigen. - Diese Einrichtung ist nicht geeignet, einem gewaltsamen Trennen von Trägergehäuse für die Lenksäule und dem in das Trägergehäuse eingesetzten Lenkschlossgehäuse entgegenzuwirken, um so zu verhindern, dass die Arretierung des Schließbolzens aufgehoben wird.

Die DE 37 25 446 A offenbart ein Lenksäulenmodul gemäß dem Oberbegriff des Anspruchs 1.

Es ist Aufgabe der vorliegenden Erfindung, ein Lenksäulenmodul so weiterzubilden, dass durch eine sehr sichere Lenksäulenverriegelung ein hoher Diebstahlschutz gewährleistet ist. Das Lenksäulenmodul soll darüber hinaus baulich einfach gestaltet und einfach montierbar sein.

Gelöst wird die Aufgabe durch ein Lenksäulenmodul der eingangs genannten Art, bei dem das Trägergehäuse im Bereich seiner Lenksäulenwandung mit einer Verstärkungsplatte aus Metall versehen ist, das Lenkschlossgehäuse die Verstärkungsplatte durchsetzt und das Mittel zum Verbinden von Lenkschlossgehäuse und Trägergehäuse zwischen dem Lenkschlossgehäuse und der Verstärkungsplatte wirkt.

Durch das Zusammenwirken ausschließlich metallischer Bauteile - metallische Verstärkungsplatte, metallisches Mittel zum Verbinden von Lenkschlossgehäuse und Trägergehäuse, metallischem Lenkschlossgehäuse - wird die Ausbrechkraft, die erforderlich ist, das Lenkschlossgehäuse vom Trägergehäuse zu trennen, deutlich erhöht. Die Gefahr, dass die Lenkradarretierung herausgebrochen werden kann, ist infolgedessen wesentlich herabgesetzt. Um die erfindungsgemäß erreichte höhere Diebstahlsicherheit zu erzielen, müssen an bestehenden Lenksäulenmodulen nur wenige Veränderungen vorgenommen werden, die sich auf das Lenkschlossgehäuse und das Trägergehäuse beschränken. Der Ort, an dem diese Veränderungen vorgenommen werden, befindet sich in einem zentralen Bereich des Lenksäulenmoduls, der von außen nur schwer oder nicht zugänglich ist, womit Manipulationen an dieser Sicherung erschwert bzw. verhindert werden.

Das Mittel zum Verbinden von Lenkschlossgehäuse und Trägergehäuse, das zwischen dem Lenkschlossgehäuse und der Verstärkungsplatte wirksam ist, kann unterschiedlich gestaltet sein und unterschiedlich wirken. Es wird als vorteilhaft angesehen, wenn das Mittel zwischen dem Lenkschlossgehäuse und der Verstärkungsplatte form- und kraftschlüssig wirkt. Dies kann beispielsweise dadurch erfolgen, dass das Mittel, bezogen auf die Längserstreckung des Schließbolzens, senkrecht zu dessen Längsachse positioniert ist und formschlüssig mit dem Lenkschlossgehäuse zusammenwirkt und sich an der Verstärkungsplatte abstützt. Es ist andererseits denkbar, das Mittel axial zu positionieren, somit in Längsrichtung des Schließbolzens.

Gemäß einer besonderen Ausführungsform der Erfindung ist vorgesehen, dass das Mittel zum Verbinden von Lenkschlossgehäuse und Trägergehäuse als Klammer ausgebildet ist, die in mindestens einer Nut des Lenkschlossgehäuses eingesetzt ist. Ist die Klammer U-förmig ausgebildet, wird sie beispielsweise nur mit ihren beiden parallelen Schenkeln in auf zwei abgewandten Seiten des Lenkschlossgehäuses eingebrachte Nuten eingesteckt. Ist das Lenkschlossgehäuse hingegen mit einer U-förmigen Nut versehen, kann auch der die beiden Schenkel der Klammer verbindende Steg in die Nut eingesetzt werden. Der aus der Nut herausragende Bereich der Klammer stützt sich am Trägergehäuse ab.

Eine besonders günstige Lagerung und Anordnung der Verstärkungsplatte bezüglich des Trägergehäuses ergibt sich, wenn das Trägergehäuse mit hinterschnittenen Nuten und die Verstärkungsplatte mit seitlichen Ansätzen versehen sind, wobei die Verstärkungsplatte im Bereich deren Ansätzen in die Nuten des Trägergehäuses einschiebbar ist. Bevorzugt erfolgt das Einschieben der Verstärkungsplatte in axialer Richtung des Trägergehäuses, somit in Längsrichtung der Lenksäule. Eine solche Gestaltung bietet sich insbesondere dann an, wenn die Verstärkungsplatte entsprechend der der Lenksäule benachbarten Innenwand des Trägergehäuses gebogen ist. Die der Lenksäule zugeordnete Kontur der Verstärkungsplatte entspricht somit der Kontur der benachbarten Wandung des Trägergehäuses. Damit in diesem Fall ausreichend Platz zum Befestigen des Lenkschlossgehäuses mittels der Klammer verbleibt, ist die Verstärkungsplatte mit einer Aussparung versehen. Das Lenkschlossgehäuse durchsetzt einen zentralen Bereich der Aussparung. In diesem vertieften Bereich der Verstärkungsplatte liegt die Klammer an dieser an. Es ragt im Wesentlichen nur der Schließbolzen in den lichten Raum, der durch die Innenwandung von Trägergehäuse und Verstärkungsplatte gebildet ist.

Es wird als besonders vorteilhaft angesehen, wenn das Lenkschlossgehäuse mit mindestens einer Sollbruchstelle versehen ist, wobei beim Brechen der Sollbruchstelle der Schließbolzen in seiner arretierten Stellung verbleibt. Sollte damit jemand gewaltsam versuchen, das Lenkschlossgehäuse vom Trägergehäuse zu trennen, bricht das Lenkschlossgehäuse, wobei durch geeignete Mittel sicherzustellen ist, dass dies zur Entkopplung des vom Trägergehäuse wegbewegten Gehäuseteils des Lenkschlossgehäuses vom Schließbolzen führt.

Weitere Merkmale der Erfindung sind in den Unteransprüchen, der Beschreibung der Figuren sowie den Figuren selbst dargestellt.

In den Figuren ist die Erfindung anhand eines Ausführungsbeispieles dargestellt, ohne hierauf beschränkt zu sein. Es zeigt:
- Fig. 1: in einer Explosionsdarstellung das Lenksäulenmodul, das im wesentlichen aus dem Trägergehäuse für die Lenk- säule und einem Lenkschlossgehäuse besteht,
- Fig. 2: eine räumliche Ansicht des Lenk- schlossgehäuses, veranschaulicht bei in dieses eingefahrenem Schließbolzen zum Arretieren der Lenksäule,
- Fig. 3: eine räumliche Ansicht desjenigen Ge- häuseteils des Lenkschlossgehäuses, das der Aufnahme des Schließbolzens dient, veranschaulicht bei separat dargestelltem Schließbolzen,
- Fig. 4: in einer räumlichen Ansicht das Lenk- säulenmodul im Verbindungsbereich von Trägergehäuse und Lenkschlossgehäuse.

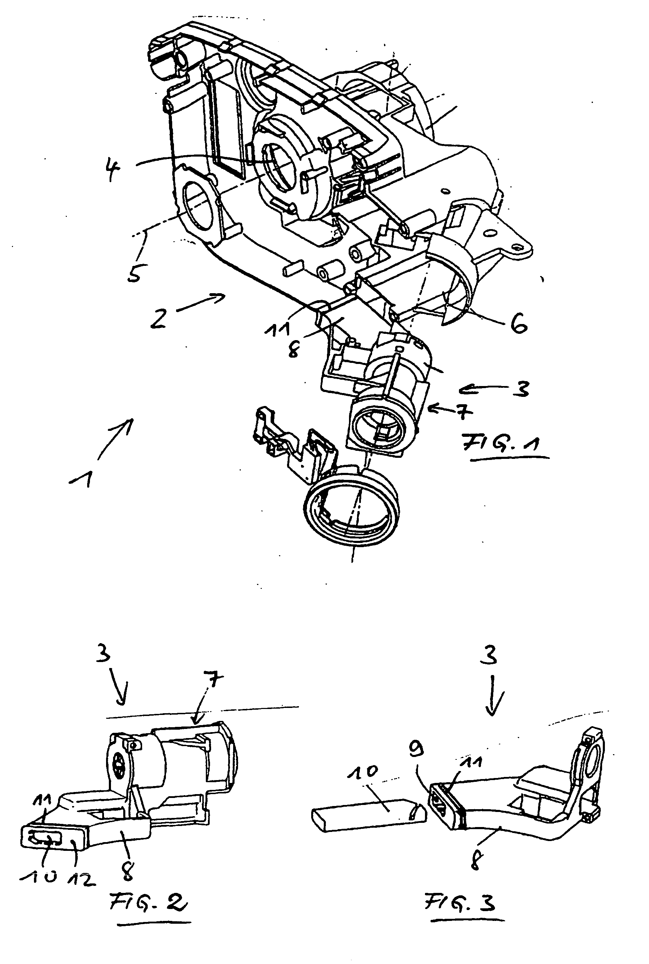

Figur 1 veranschaulicht das Lenksäulenmodul 1, das im wesentlichen durch das als Kunststoffspritzgussteil ausgebildete Trägergehäuse 2 und ein in das Trägergehäuse 2 eingesetztes Lenkschlossgehäuse 3 aus Metall gebildet ist. Das Trägergehäuse ist mit einem zentralen, im Querschnitt etwa kreisförmigen Durchgang 4 zur Aufnahme einer nicht gezeigten Lenksäule versehen. Deren Längsmittelachse ist mit der strichpunktierten Linie 5 wiedergegeben. Das Trägergehäuse 2 weist eine Aufnahme 6 für das Lenkschlossgehäuse 3 auf. Das Lenkschlossgehäuse 3 weist einen Stator 7 sowie einen mit diesem verbundenen Gehäuseabschnitt 8 auf, der mit einem Durchgang 9 zur Aufnahme eines Schließbolzens 10 versehen ist. Dieser dient dem Arretieren der Lenksäule in seiner ausgefahrenen Stellung, indem er in eine Ausnehmung der Lenksäule eingreift.

Nicht gezeigt ist in der Figur 1 ein weiteres Trägergehäuse, das in Art eines Deckels auf das Trägergehäuse 2 aufsteckbar ist. Die beiden Trägergehäuse sind miteinander rastierend verbindbar.

Wie der Darstellung der Figuren 1 bis 3 zu entnehmen ist, ist der Gehäuseabschnitt 8 des Lenkschlossgehäuses 3 mit einer Nut 11 versehen. Diese verläuft entsprechend einem U in einer Ebene parallel zur Stirnfläche 12 des Gehäuseabschnitts 8; auf die Orientierung nach Figur 2 bezogen, im oberen, unteren und einem seitlichen Bereich des Gehäuseabschnitts 8. Die Stirnfläche 12 des Gehäuseabschnitts 8 wird von dem Schließbolzen 10 in seiner ausgefahrenen Stellung durchsetzt.

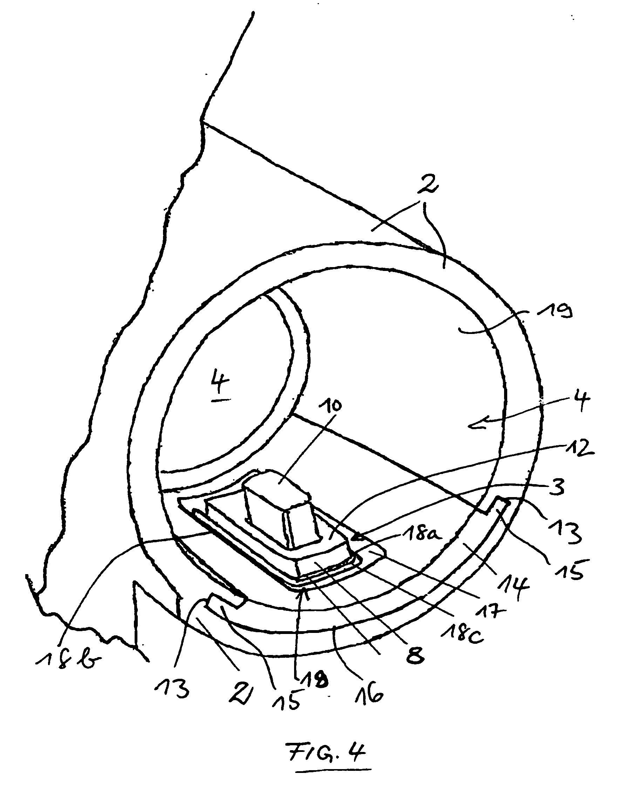

Figur 4 veranschaulicht den Bereich, in dem das Lenkschlossgehäuse 3 mit dem Trägergehäuse 2 verbunden ist und in dem der Schließbolzen 10 in den Raum, der von der Lenksäule eingenommen wird, einführbar ist.

Wie dieser Figur zu entnehmen ist, ist das Trägergehäuse 2 mit zwei parallelen, hinterschnittenen Nuten 13 versehen, in die eine entsprechend dem rohrförmigen Abschnitt des Trägergehäuses 2 gekrümmte metallische Verstärkungsplatte 14 mit deren seitlichen Ansätzen 15 eingeschoben ist. Das Einschieben der Verstärkungsplatte 14 in das Trägergehäuse 2 erfolgt in Richtung der Längsachse des Durchganges 4, wiedergegeben durch die Linie 5. Die Verstärkungsplatte 14 ist somit in eine entsprechend dem Querschnitt der Verstärkungsplatte 14, bezogen auf deren Einschieberichtung, gestaltete Aussparung 16 des Trägergehäuses 2 eingeschoben. Die gekrümmte Verstärkungsplatte 14 selbst ist mit einer zentralen Aussparung 17 versehen, die einen vertieften Bereich der Verstärkungsplatte 14 darstellt und dem Zweck dient, den Ort für das diebstahlsichere Verbinden von Lenkschlossgehäuse 3 und Trägergehäuse 2, konkret von Gehäuseabschnitt 8 des Lenkschlossgehäuses 3 und der in das Trägergehäuse 2 eingesetzten Verstärkungsplatte 4 zu schaffen. So fluchtet die Stirnfläche 12 des Gehäuseabschnitts 8 im wesentlichen mit den angrenzenden, nicht mit der Aussparung 17 versehenen Oberflächenbereichen des zylindrischen Abschnitts des Trägergehäuses 2. Eine in Form eines U gestaltete Klammer 18 aus Metall ist bei vollständig in das Trägergehäuse 2 eingeführtem Lenkschlossgehäuse 3 in die U-förmige Nut 11 des Gehäuseabschnitts 8 eingeführt, wobei die Klammer 18 in den Nutbereichen des Gehäuseabschnitts 8 aus den Nuten ragt. Die beiden parallelen Schenkel der Klammer 18 sind mit den Bezugsziffern 18a und 18b, der die beiden Schenkel verbindende Steg der Klammer mit der Bezugsziffer 18c bezeichnet.

Sofern bei einem geplanten Diebstahl versucht wird, die Lenkradsperre aufzuheben, indem das Lenkschloss bzw. das Lenkschlossgehäuse aus dem Trägergehäuse 2 gezogen werden soll, legt sich die metallische Klammer 18 bei Zug und damit Relativverschiebung von Gehäuseabschnitt 8 und Trägergehäuse 2 gegen die gleichfalls aus Metall bestehende Verstärkungsplatte 14. Aufgrund der großflächigen Kraftübertragung von dieser auf das aus Kunststoff bestehende Trägergehäuse 2 ist gewährleistet, dass das Trägergehäuse 2 nicht bricht. Ergänzend sind im Lenkschlossgehäuse 3 nicht gezeigte Sollbruchstellen vorgesehen, die zu einem Bruch des Lenkschlossgehäuses 3 führen, wenn die Zugkraft weiter erhöht wird. Infolgedessen verbleibt der Schließbolzen 10 in seiner Arretierposition.

Durch eine geeignete geometrische Abstimmung zwischen Gehäuseabschnitt 8 des Lenkschlossgehäuses 3 und der Aussparung 17 in der Verstärkungsplatte 14 ist sichergestellt, dass die Metallklammer 18 nicht aus der Nut 11 springt. Durch eine dem Verbindungsbereich, konkret den Bereich der Klammer, weitgehend abdeckende Gestaltung des Trägergehäuses 2 ist gleichzeitig sichergestellt, dass ein unbefugtes Entfernen der Klammer 18 nur mit erheblichem Zeitaufwand möglich ist.

### Bezugszeichenliste

- Lenksäulenmodul: 1
- Trägergehäuse: 2
- Lenkschlossgehäuse: 3
- Durchgang: 4
- Linie: 5
- Aufnahme: 6
- Stator: 7
- Gehäuseabschnitt: 8
- Durchgang: 9
- Schließbolzen: 10
- Nut: 11
- Stirnfläche: 12
- Nut: 13
- Verstärkungsplatte: 14
- Ansatz: 15
- Aussparung: 16
- Aussparung: 17
- Klammer: 18
- Schenkel: 18a, 18b
- Steg: 18c

## Patentansprüche

1. Lenksäulenmodul (1), mit einem Trägergehäuse (2) aus Kunststoff für die Lenksäule und einem in das Trägergehäuse (2) eingesetzten Lenkschlossgehäuse (3) aus Metall, das einen Schließbolzen (10) zum Arretieren der Lenksäule aufnimmt, sowie mit einem metallischen Mittel (18) zum Verbinden von Lenkschlossgehäuse (3) und Trägergehäuse (2), wobei
das Trägergehäuse (2) im Bereich seiner Lenksäulenwandung (19) mit einer Verstärkungsplatte (14) aus Metall versehen ist,
**gekennzeichnet durch** folgende Merkmale :
- das Lenkschlossgehäuse (3) durchsetzt die Verstärkungsplatte (14),
- das Mittel (18) zum Verbinden von Lenkschlossgehäuse (3) und Trägergehäuse (2) wirkt zwischen dem Lenkschlossgehäuse (3) und der Verstärkungsplatte (14).

2. Modul nach Anspruch 1, **dadurch gekennzeichnet, dass** das Mittel (18) zum Verbinden von Lenkschlossgehäuse (3) und Trägergehäuse (2) in das Lenkschlossgehäuse (3) formschlüssig eingreift und sich an der Verstärkungsplatte (14) abstützt.

3. Modul nach Anspruch 2, **dadurch gekennzeichnet, dass** das Mittel (18) zum Verbinden von Lenkschlossgehäuse (3) und Trägergehäuse (2) als Klammer (18) ausgebildet ist, die in mindestens eine Nut (11) des Lenkschlossgehäuses (3) eingesetzt ist.

4. Modul nach Anspruch 3, **dadurch gekennzeichnet, dass** die Nut (11) in Art eines U in das Lenkschlossgehäuse (3) eingebracht ist, oder zwei Nuten vorgesehen sind, die auf einander abgewandten, insbesondere parallel zueinander angeordneten Seiten des Lenkschlossgehäuses (3) in dieses eingebracht sind.

5. Modul nach Anspruch 4, **dadurch gekennzeichnet, dass** die Klammer (18) die Form eines U aufweist.

6. Modul nach einem der Ansprüche 1 bis 5, **dadurch gekennzeichnet, dass** das Trägergehäuse (2) mit hinterschnittenen Nuten (13) und die Verstärkungsplatte (14) mit seitlichen Ansätzen (15) versehen sind, wobei die Verstärkungsplatte (14) im Bereich deren Ansätzen (15) in die Nuten (13) des Trägergehäuses (2) in Längsrichtung der Lenksäule einschiebbar ist.

7. Modul nach Anspruch 6, **dadurch gekennzeichnet, dass** das Trägergehäuse (2) eine Aussparung (16) zur Aufnahme der Verstärkungsplatte (14) aufweist.

8. Modul nach Anspruch 7, **dadurch gekennzeichnet, dass** die Verstärkungsplatte (14) entsprechend der der Lenksäule benachbarten Innenwand (19) des Trägergehäuses (2) gebogen ist.

9. Modul nach einem der Ansprüche 1 bis 8, **dadurch gekennzeichnet, dass** die Verstärkungsplatte (14) mit einer Aussparung (17) versehen ist, wobei einen zentralen Bereich der Aussparung (17) das Lenkschlossgehäuse (3) durchsetzt, sowie das Mittel (18) zum Verbinden von Lenkschlossgehäuse (3) und Trägergehäuse (2) bei Zugbeanspruchung des Lenkschlossgehäuses (3), die Verstärkungsplatte (14) im Bereich der Aussparung (17) kontaktiert.

10. Modul nach einem der Ansprüche 1 bis 9, **dadurch gekennzeichnet, dass** das Lenkschlossgehäuse (3) mit mindestens einer Sollbruchstelle versehen ist, wobei beim Brechen der Sollbruchstelle der Schließbolzen (10) in seiner arretierten Stellung verbleibt.

## Claims

1. Steering column module (1), with a carrier housing (2) made of plastic for the steering column and a steering lock housing (3) made of metal which is inserted in the carrier housing (2) and which receives a locking bolt (10) for locking the steering column, as well as with a metal means (18) for connecting steering lock housing (3) and carrier housing (2), wherein, in the region of its steering column wall (19), the carrier housing (2) is provided with a reinforcing plate (14) made of metal, **characterised by** the following characteristics:
- the steering lock housing (3) passes through the reinforcing plate (14),
- the means (18) for connecting steering lock housing (3) and carrier housing (2) operates between the steering lock housing (3) and the reinforcing plate (14).

2. Module according to claim 1, **characterised in that** the means (18) for connecting steering lock housing (3) and carrier housing (2) engages in the steering lock housing (3) in form-locking relationship and is supported on the reinforcing plate (14).

3. Module according to claim 2, **characterised in that** the means (18) for connecting steering lock housing (3) and carrier housing (2) is designed as a clip (18) which is inserted in at least one groove (11) of the steering lock housing (3).

4. Module according to claim 3, **characterised in that** the groove (11) is introduced after the fashion of a U into the steering lock housing (3), or there are provided two grooves which are introduced into the steering lock housing (3) on sides thereof facing away from each other and in particular arranged parallel to each other.

5. Module according to claim 4, **characterised in that** the clip (18) has the shape of a U.

6. Module according to any of claims 1 to 5, **characterised in that** the carrier housing (2) is provided with undercut grooves (13) and the reinforcing plate (14) is provided with lateral attachments (15), wherein the reinforcing plate (14) in the region of its attachments can be inserted in the grooves (13) of the carrier housing (2) in the longitudinal direction of the steering column.

7. Module according to claim 6, **characterised in that** the carrier housing (2) has a recess (16) for receiving the reinforcing plate (14).

8. Module according to claim 7, **characterised in that** the reinforcing plate (14) is bent according to the inner wall (19) of the carrier housing (2) adjacent to the steering column.

9. Module according to any of claims 1 to 8, **characterised in that** the reinforcing plate (14) is provided with a recess (17), wherein the steering lock housing (3) passes through a central region of the recess (17), and the means (18) for connecting steering lock housing (3) and carrier housing (2) contacts the reinforcing plate (14) in the region of the recess (17) when the steering lock housing (3) is subjected to tension.

10. Module according to any of claims 1 to 9, **characterised in that** the steering lock housing (3) is provided with at least one predetermined break point, wherein, when the predetermined break point breaks, the locking bolt (10) remains in its locked position.

## Revendications

1. Module de colonne (1) de direction, avec un boîtier de support (2) en matière plastique pour la colonne de direction et un boîtier de serrure de direction (3) en métal installé dans le boîtier de support (2), qui contient un verrou de fermeture (10) pour bloquer la colonne de direction, ainsi qu'avec un moyen métallique (18) pour relier le boîtier (3) de serrure de direction et le boîtier de support (2), dans lequel le boîtier de support (2) est pourvue d'une plaque de renforcement (14) en métal dans la zone de sa paroi (19) de la colonne de direction, **caractérisé par** les caractéristiques suivantes:
- le boîtier de serrure de direction (3) traverse la plaque de renforcement (14),
- le moyen (18) pour relier le boîtier de serrure de direction (3) et le boîtier de support (2) agit entre le boîtier de serrure de direction (3) et la plaque de renforcement (14).

2. Boîtier selon la revendication 1, **caractérisé en ce que** le moyen (18) pour relier le boîtier de serrure de direction (3) et le boîtier de support (2) s'engage par liaison de ferme dans le boîtier de serrure de direction (3) et prend appui sur la plaque de renforcement (14).

3. Boîtier selon la revendication 2, **caractérisé en ce que** le moyen (18) pour relier le boîtier de serrure de direction (3) et le boîtier de support (2) a la forme d'une bride (18), qui est introduite dans au moins une rainure (11) du boîtier de serrure de direction (3).

4. Boîtier selon la revendication 3, **caractérisé en ce que** la rainure (11) est disposée à la manière d'un U dans le boîtier (3) de serrure de direction, ou bien il est prévu deux rainures qui sont disposées dans le boîtier (3) de serrure de direction, sur deux faces de celui-ci opposées l'une à l'autre, en particulier disposées parallèlement l'un à l'autre.

5. Boîtier selon la revendication 4, **caractérisé en ce que** la bride (18) présente la forme d'un U.

6. Boîtier selon l'une quelconque des revendications 1 à 5, **caractérisé en ce que** le boîtier de support (2) est pourvue de rainures en contre-dépouille (13) et la plaque de renforcement (14) est pourvue de saillies latérales (15), la plaque de renforcement (14) étant susceptible d' être insérée dans la région de ses prolongements (15) dans les rainures (13) du boîtier de support (2) dans la direction longitudinale de la colonne de direction.

7. Boîtier selon la revendication 6, **caractérisé en ce que** le boîtier de support (2) présente un évidement (16) destiné à recevoir la plaque de renforcement (14).

8. Boîtier selon la revendication 7, **caractérisé en ce que** la plaque de renforcement (14) est cintrée de façon correspondante à la paroi intérieure (19) du boîtier de support (2) voisine de la colonne de direction.

9. Boîtier selon l'une quelconque des revendications 1 à 8, **caractérisé en ce que** la plaque de renforcement (14) est pourvue d'un évidement (17),**en ce que** (3) le boîtier de serrure de direction traverse une région centrale de l'évidement (17), et **en ce que** le moyen (18) pour relier le boîtier de serrure de direction (3) et le boîtier de support (2) tient en contact avec la plaque de renforcement (14) dans la région de l'évidement (17) dans le cas où une contrainte de traction est exercée sur le boîtier (3).de serrure de direction

10. Boîtier selon l'une quelconque des revendications 1 à 9, **caractérisé en ce que** le boîtier de serrure de direction (3) est pourvu d'au moins une zone de rupture préferencielle, le verrou de fermeture (10) restant dans sa position de blocage en cas de rupture de la zone de rupture préferencielle.
